# FASCICULE DE BREVET EUROPEEN

(11) **EP 1 905 689 B1**
(45) Date de publication et mention de la délivrance du brevet: **04.05.2016**
(21) Numéro de dépôt: 07291060.7
(22) Date de dépôt: 03.09.2007
(51) Int. Cl.: B64D 27/26, B64D 29/08

(54) **Système propusif intégré comportant un moteur à turboreacteur à double flux**
Integriertes Antriebssystem, das einen Doppeltstrom-Turbinentriebwerksmotor umfasst
Integrated propulsion system comprising a turbofan engine

(30) Priorité: 20.09.2006 FR 0608218
(43) Date de publication de la demande: 02.04.2008
(73) Titulaire: SNECMA, 75015 Paris (FR)
(72) Inventeur: Guibert Thibaud, Jean-Baptiste, 41240 Ouzouer le Marche (FR); Lefort, Guillaume, 75012 Paris (FR); Tesniere, Marc Patrick, 92710 Champceuil (FR)
(74) Mandataire: Ramey, Daniel

(56) Documents cités:
- EP-A1- 0 453 360
- WO-A-94/24430
- FR-A1- 2 757 823
- GB-A- 2 259 954
- US-A- 5 350 136
- US-A- 5 524 847

## Description

L'invention concerne un système propulsif intégré pour un avion, comportant un moteur à turboréacteur à double flux, comprenant une nacelle portée par un carter intermédiaire du moteur et qui délimite un espace d'écoulement d'un flux secondaire autour du turboréacteur, ce flux secondaire étant destiné à fournir plus de 80% de la poussée.

Le moteur est en général accroché sous une aile ou à une partie du fuselage ou de l'empennage de l'avion, au moyen d'un pylône qui est une pièce très robuste et très lourde et qui est fixé au moteur en plusieurs points au travers de suspensions par lesquelles passent tous les efforts transmis entre le moteur et l'avion.

La fixation par pylône et suspensions se traduit aussi par un déport de la reprise de poussée par rapport à l'axe du moteur, qui entraîne une flexion globale de la ligne des carters du moteur. Le pylône est de plus fixé sur le moteur par des éléments qui traversent et obstruent partiellement la veine d'écoulement du flux secondaire à l'intérieur de la nacelle, ce qui amène à augmenter de façon correspondante les dimensions radiales de la nacelle alors que les constructeurs d'avion souhaiteraient plutôt diminuer ces dimensions, en particulier pour les moteurs à fort taux de dilution.

La présente invention a pour objet un système propulsif du type décrit ci-dessus, qui évite les inconvénients précités de la technique antérieure de façon simple, efficace et économique, et qui de plus facilite les opérations de maintenance auxquelles le moteur est périodiquement soumis.

Elle propose à cet effet un système propulsif intégré pour avion comprenant un moteur à turboréacteur à double flux et une nacelle portée par un carter intermédiaire qui délimite un espace annulaire d'écoulement d'un flux secondaire autour du turboréacteur, caractérisé en ce que la nacelle comporte une structure cylindrique aval en deux parties, dont l'une est une armature fixe comprenant des moyens de fixation d'organes d'accrochage du moteur sur une partie de l'avion ainsi que des moyens de fixation sur le carter intermédiaire, et dont l'autre est une partie mobile portée par l'armature fixe et déplaçable entre une position de service où elle est appliquée sur l'armature fixe pour le fonctionnement du moteur, et une position d'ouverture où elle est écartée de l'armature fixe pour permettre l'accès à des composants du moteur, des moyens de verrouillage étant prévus pour solidariser la partie mobile sur l'armature fixe dans la position de service afin de rigidifier la structure aval de la nacelle et améliorer la transmission d'efforts du moteur à l'avion.

Cette structure cylindrique aval de la nacelle, appelée « OFS » (Outer Fixed Structure) dans la technique, a une rigidité qui permet une transmission d'efforts entre le moteur et l'avion. Sa fixation sur le carter intermédiaire du moteur lui permet de supporter intégralement le moteur et de supprimer le pylône utilisé dans la technique antérieure, qui est remplacé par des moyens beaucoup plus légers d'accrochage à l'avion, ce qui se traduit par un gain de poids important. En outre, la configuration de la structure cylindrique aval de la nacelle en deux parties dont l'une est mobile offre une possibilité d'accéder à des composants internes du turboréacteur pour la maintenance, sans avoir à démonter l'ensemble de cette structure cylindrique aval.

La partie mobile peut être déplaçable en rotation et/ou en translation par rapport à l'armature fixe.

Dans un mode de réalisation préféré de l'invention, la partie mobile est formée de deux treillis semi-cylindriques articulés sur l'armature fixe autour d'axes longitudinaux permettant leur déplacement entre la position de service et la position de maintenance. Des panneaux de carénage ou de capotage sont montés sur ces treillis et forment une paroi externe de guidage du flux secondaire généré par la soufflante du moteur.

Le moteur selon l'invention peut être équipé ou non d'un inverseur de poussée. Dans le premier cas, les deux treillis semi-cylindriques sont ajourés pour que le flux secondaire généré par la soufflante puisse être dévié à travers ces treillis lors du fonctionnement de l'inverseur de poussée. Les panneaux de carénage ou de capotage montés sur les deux treillis semi-cylindriques sont alors déplaçables en translation entre une position amont dans laquelle ils obturent les parties ajourées des deux treillis, et une position aval dans laquelle ils dégagent ces parties ajourées et autorisent le fonctionnement de l'inverseur de poussée.

Selon l'invention, les treillis peuvent s'ouvrir selon un angle compris entre 40 degrés et 180 degrés par rapport à l'armature fixe, afin d'offrir un accès aisé à l'intérieur du moteur lors de la maintenance.

L'invention concerne également une structure cylindrique aval de nacelle d'un système propulsif intégré du type décrit ci-dessus, caractérisée en ce qu'elle comporte deux parties, dont l'une est une armature fixe comprenant des moyens de fixation d'organes d'accrochage du moteur sur une partie de l'avion ainsi que des moyens de fixation sur le carter intermédiaire, et dont l'autre est une partie mobile portée par l'armature fixe et formée de deux treillis semi-cylindriques articulés autour de deux axes longitudinaux sur l'armature fixe.

Dans un mode de réalisation particulier de l'invention, les deux treillis semi-cylindriques sont ajourés et des panneaux de carénage ou de capotage sont montés coulissants longitudinalement sur ces treillis.

De façon générale, l'ensemble propulsif selon l'invention peut être fixé par les moyens précités sur une partie quelconque d'un avion, et par exemple sous une aile, sur une aile, sur une structure intégrée à l'aile, sur le fuselage ou sur l'empennage de l'avion.

D'autres avantages et caractéristiques de l'invention apparaîtront à la lecture de la description suivante faite à titre d'exemple non limitatif et en référence aux dessins annexés dans lesquels :
- la figure 1 est une vue de côté d'un système selon l'invention ;
- la figure 2 est une vue schématique en perspective et arrachement partiel d'un système selon l'invention, dans une position de maintenance ;

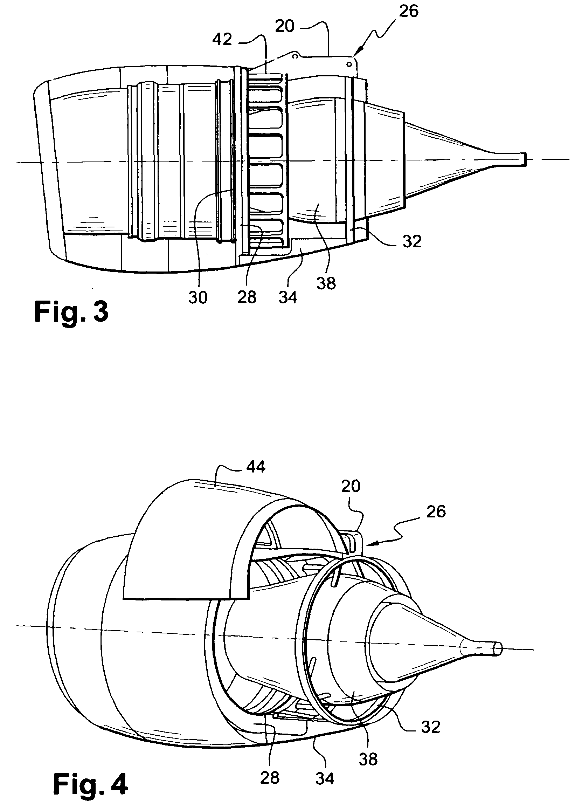

- la figure 3 est une vue schématique de côté et en coupe partielle du système de la figure 2, dans une position de fonctionnement ;
- la figure 4 est une autre vue schématique en perspective et sans arrachement partiel du système des figures 2 et 3 dans une position de maintenance ;
- La figure 5 est une autre vue schématique en perspective du système de la figure 4.

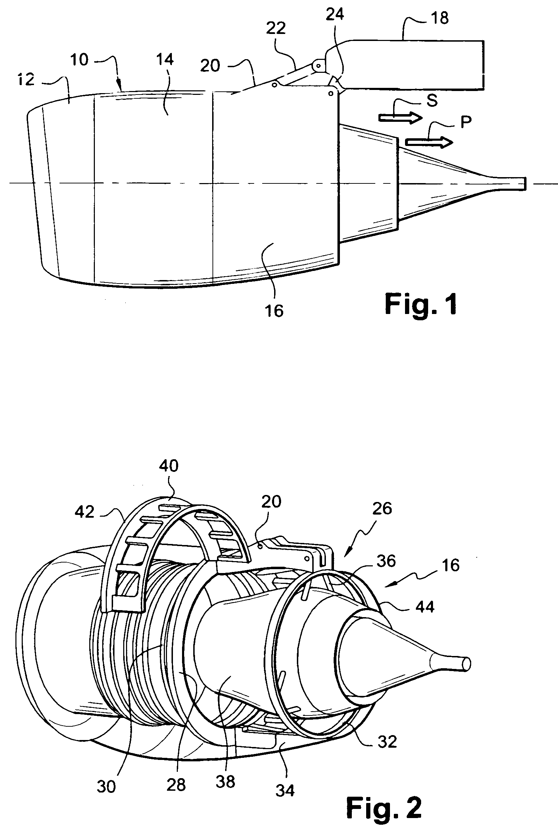

Le système propulsif à moteur à turboréacteur à double flux qui est représenté schématiquement en figure 1 comprend essentiellement une nacelle 10 de forme cylindrique qui entoure une roue de soufflante à sa partie amont et un turboréacteur dont seule la partie arrière est visible en figure 1, la roue de soufflante étant entraînée en rotation par la turbine du turboréacteur, d'une façon bien connue de l'homme du métier.

Pendant le fonctionnement du moteur, la soufflante génère un flux d'air secondaire qui s'écoule à l'intérieur de la nacelle 10 vers l'arrière autour du turboréacteur et qui fournit 80% de la poussée du moteur. Une partie de l'air entrant dans le moteur alimente le compresseur d'entrée du turboréacteur, puis est mélangée à du carburant dans la chambre de combustion. Les gaz de combustion sortant de la chambre de combustion passent dans la turbine puis sont éjectés dans un carter d'échappement et sortent du turboréacteur comme indiqué par la flèche P en figure 1, dans laquelle la flèche voisine S désigne la sortie du flux secondaire.

La nacelle 10 du moteur comprend une partie cylindrique amont 12 appelée manche d'entrée d'air, une partie cylindrique intermédiaire 14 formée de capots portés par le carter intermédiaire du moteur, et une partie cylindrique aval 16 appelée généralement « OFS » (Outer Fixed Structure) qui est selon l'invention une partie structurante transmettant les efforts et servant à la fixation du moteur sur une structure porteuse 18 faisant partie, par exemple, d'une aile d'avion.

La partie aval 16 de la nacelle comprend, comme on le verra plus en détail dans ce qui suit, des panneaux de capotage fixés sur une armature qui comporte dans sa partie supérieure une poutre longitudinale 20 servant à la fixation de tiges ou de biellettes 22, 24 d'accrochage du moteur sur la structure porteuse 18. Ces organes d'accrochage 22, 24 constituent un ensemble rigide et indéformable quand leurs extrémités sont fixées sur la poutre 20 et sur la structure porteuse 18.

Ce mode de fixation du moteur sur une partie de l'avion permet de supprimer le pylône traditionnellement utilisé dans la technique antérieure, qui est une pièce lourde et dont les points de fixation sur le moteur créent des distorsions de carcasse et obstruent partiellement la section de passage du flux secondaire dans la nacelle 10, ce qui amène à augmenter le diamètre de cette nacelle et constitue un inconvénient du point de vue des constructeurs d'avion.

Comme on le voit mieux en figure 2, l'ossature ou armature 26 de la partie cylindrique aval 16 de la nacelle comprend une bride annulaire amont 28 par laquelle elle peut être fixée sur au moins une partie de la périphérie d'une bride annulaire externe 30 du carter intermédiaire du moteur, cette fixation réalisée par boulonnage s'étendant au moins sur 180° autour de l'axe du moteur et de préférence sur 360°, c'est-à-dire sur toute la circonférence de la bride annulaire 30.

L'ossature 26 comprend également une partie annulaire aval 32, qui est reliée à la bride annulaire amont 28 par la poutre longitudinale 20 précitée et par un montant longitudinal inférieur 34 diamétralement opposé à la poutre 20. La partie annulaire aval 30 peut être reliée par des biellettes ou des tiges de liaison 36 à la partie d'extrémité aval d'une enveloppe cylindrique 38, appelée généralement IFS (Inner Fixed Structure) dans la technique et qui constitue la surface interne de guidage du flux secondaire.

Avantageusement, cette enveloppe cylindrique interne 38 peut être une pièce rigide dont l'extrémité amont est fixée par boulonnage sur une bride annulaire interne du carter intermédiaire du moteur et sert alors également à réduire les distorsions de carcasse.

La partie cylindrique aval 16 de la nacelle comprend, selon l'invention, l'ossature ou armature 26 précitée, qui est montée fixe sur le moteur, et une autre partie qui est mobile par rapport à la première et qui est portée par cette première partie, cette autre partie étant constituée, dans l'exemple représenté en figure 2, de deux treillis semi-cylindriques 40 qui sont articulés à l'une de leurs extrémités sur la poutre 20 autour d'axes longitudinaux, de part et d'autre de cette poutre. Chaque treillis 40 peut pivoter autour de son axe d'articulation sur un angle compris entre 40 et 180° environ, pour donner accès à l'enveloppe cylindrique interne 38 et au turboréacteur afin de faciliter la maintenance du moteur sous aile.

Lorsque le moteur n'est pas équipé d'un inverseur de poussée, chaque treillis 40 peut comprendre une armature ou une ossature quelconque sur laquelle sont fixés des panneaux de capotage ou de carénage.

Lorsque le moteur est équipé d'un inverseur de poussée, ces treillis peuvent porter l'inverseur de poussée et être constitués d'une armature ajourée 42 formant un treillis permettant la fixation des grilles de l'inverseur de poussée et de panneaux de capotage 44 montés extérieurement sur cette armature de façon à pouvoir coulisser longitudinalement sur celle-ci, entre une position amont où ils obturent la grille de sortie de l'inverseur de poussée et une position aval où ils dégagent cette grille de sortie de façon à permettre le fonctionnement de l'inverseur de poussée.

Des moyens de verrouillage d'un type connu, par exemple à crochets, à mâchoires ou à griffes, sont prévus pour assurer le maintien en position des treillis semi-cylindriques 40 dans leur position de service sur l'ossature 26 de la partie cylindrique aval 16 de la nacelle. Ces moyens de verrouillage peuvent être agencés sur la bride annulaire amont 28 de l'ossature 26 et/ou sur le montant longitudinal 34 diamétralement opposé à la poutre 20. Des moyens complémentaires de liaison entre l'armature fixe 26 et la partie mobile constituée des deux treillis semi-cylindriques 40, tels que des moyens du type connu sous la dénomination « V-Groove », peuvent être utilisés pour assurer une transmission d'effort entre ces deux parties dans la position de service de la partie mobile pendant le fonctionnement du moteur.

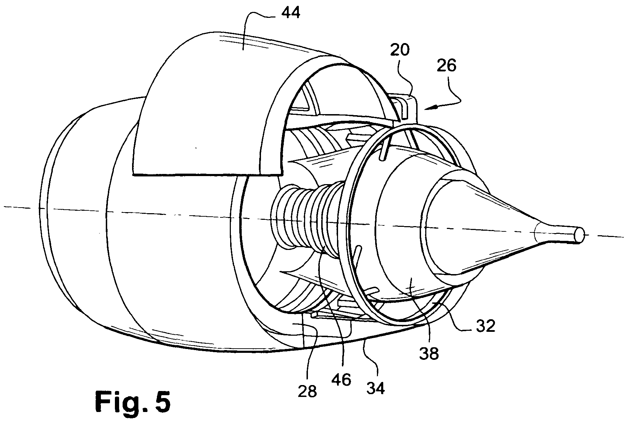

La réalisation de la partie cylindrique aval 16 de la nacelle en deux parties, respectivement fixe et mobile, facilite beaucoup la maintenance du moteur sous l'aile de l'avion, cette maintenance étant d'autant plus réalisable que l'enveloppe cylindrique interne 38 ou IFS comprend également des panneaux amovibles, comme représenté en figure 5, pour un accès direct à un certain nombre de composants du turboréacteur représenté schématiquement en 46.

## Revendications

1. Système propulsif intégré pour avion comprenant un moteur à turboréacteur à double flux et une nacelle (10) portée par un carter intermédiaire qui délimite un espace annulaire d'écoulement d'un flux secondaire autour du turboréacteur, **caractérisé en ce que** la nacelle comporte une structure cylindrique aval (16) en deux parties, dont l'une est une armature fixe (26) comprenant des moyens (20) de fixation d'organes (22, 24) d'accrochage du moteur sur une partie (18) de l'avion ainsi que des moyens de fixation sur le carter intermédiaire, et dont l'autre est une partie mobile (40) portée par l'armature fixe (26) et déplaçable entre une position de service où elle est appliquée sur l'armature fixe (26) pour le fonctionnement du moteur, et une position d'ouverture où elle est écartée de l'armature fixe pour permettre l'accès à des composants du moteur, des moyens de verrouillage étant prévus pour solidariser la partie mobile (40) sur l'armature fixe (26) dans la position de service afin de rigidifier la structure aval de la nacelle et améliorer la transmission d'efforts du moteur à l'avion.

2. Système propulsif selon la revendication 1, **caractérisé en ce que** la partie mobile (40) est déplaçable en rotation et/ou translation par rapport à l'armature fixe.

3. Système propulsif selon la revendication 1 ou 2, **caractérisé en ce qu'**au moins certains des moyens de verrouillage sont montés sur une bride annulaire (28) et sur un montant longitudinal (34) de l'armature fixe (26).

4. Système propulsif selon l'une des revendications 1 à 3, **caractérisé en ce que** la partie mobile comprend deux treillis (40) semi-cylindriques pouvant être symétriques, articulés autour d'axes longitudinaux sur l'armature fixe (26).

5. Système propulsif selon la revendication 4, **caractérisé en ce que** les deux treillis semi-cylindriques (40) sont ajourés et forment un support de grilles (42) de sortie d'un inverseur de poussée.

6. Système propulsif selon la revendication 5, **caractérisé en ce que** des panneaux de carénage ou de capotage (44) sont montés coulissants longitudinalement sur les deux treillis (40) pour permettre le fonctionnement de l'inverseur de poussée.

7. Système propulsif selon l'une des revendications 4 à 6, **caractérisé en ce que** les treillis (40) s'ouvrent selon un angle compris entre 40 degrés et 180 degrés par rapport à l'armature fixe.

8. Système propulsif selon l'une des revendications 1 à 7, **caractérisé en ce qu'**il comprend une enveloppe sensiblement cylindrique (38) formant une surface interne de guidage du flux secondaire, fixée à son extrémité amont sur le carter intermédiaire et comprenant à son extrémité aval des moyens de support et de guidage du carter d'échappement, cette enveloppe comportant des panneaux amovibles d'accès à des composants du turboréacteur situés en regard de la partie mobile (40) de la structure cylindrique aval de la nacelle.

9. Structure cylindrique aval de nacelle d'un système propulsif intégré tel que décrit dans l'une des revendications 1 à 8, **caractérisée en ce qu'**elle comporte deux parties, dont l'une est une armature fixe (26) comprenant des moyens (20) de fixation d'organes d'accrochage du moteur sur une partie de l'avion ainsi que des moyens (28) de fixation sur le carter intermédiaire, et dont l'autre est une partie mobile portée par l'armature fixe et formée de deux treillis (40) semi-cylindriques articulés autour d'axes longitudinaux sur l'armature fixe.

10. Structure cylindrique aval de nacelle selon la revendication 9, **caractérisée en ce que** les deux treillis semi-cylindriques (40) sont ajourés.

11. Structure cylindrique aval de nacelle selon la revendication 9 ou 10, **caractérisée en ce qu'**elle comprend des panneaux de capotage (44) montés coulissants longitudinalement sur les treillis (40).

## Patentansprüche

1. Integriertes Flugzeugantriebssystem, das ein Zweistrom-Turbotriebwerk und eine Gondel (10) umfasst, die von einem Zwischengehäuse getragen wird, welches einen ringförmigen Fließbereich für einen Sekundarstrom um das Triebwerk begrenzt, **dadurch gekennzeichnet dass** die Gondel einen zweiteiligen nachgeschalteten zylindrischen Aufbau (16) enthält, von dem ein Teil ein feststehendes Gestell (26) ist mit Vorrichtungen (20) zur Befestigung von Teilen (22, 24) zum Aufhängen des Motors an einen Teil (18) des Flugzeugs sowie Vorrichtungen zur Befestigung am Zwischengehäuse, und der andere Teil ein beweglicher Teil (40) ist, der von einem feststehenden Gestell (26) getragen wird und verschiebbar ist zwischen einer Betriebsposition, in der er auf das feststehende Gestell (26) für den Motorbetrieb einwirkt, und einer öffnenden Position, in der er vom feststehenden Gestell entfernt wird, um den Zugang zu den Motorkomponenten zu ermöglichen, wobei Verriegelungsvorrichtungen vorgesehen sind, um den beweglichen Teil (40) auf dem feststehenden Gestell (26) in der Betriebsposition zu befestigen, um den Aufbau hinter der Gondel zu versteifen und die Kraftübertragung des Motors an das Flugzeug zu verbessern.

2. Antriebssystem nach Patentanspruch 1, **dadurch gekennzeichnet, dass** der bewegliche Teil (40) drehbare und/oder lineare Bewegungen in Bezug auf das feststehende Gestell machen kann.

3. Antriebssystem nach Anspruch 1 oder 2, **dadurch gekennzeichnet, dass** zumindest einige der Verriegelungsvorrichtungen auf einen ringförmigen Flansch (28) und auf einer Längsstrebe (34) des feststehenden Gestells (26) montiert werden.

4. Antriebssystem nach einem der Ansprüche 1 bis 3, **dadurch gekennzeichnet, dass** der bewegliche Teil zwei halbzylindrische Gitter (40) umfasst, die symmetrisch sein können, und am feststehenden Gestell (26) gelenkig um Längsachsen angebracht sind.

5. Antriebssystem nach Patentanspruch 4, **dadurch gekennzeichnet, dass** die beiden halbzylindrischen Gitter (40) durchbrochen sind und eine Gitterhalterung (42) am Austritt einer Schubumkehrvorrichtung bilden.

6. Antriebssystem nach Anspruch 5, **dadurch gekennzeichnet, dass** Verkleidungs- oder Abdeckplatten (44) längenverschiebbar auf die beiden Gitter (40) montiert sind, um den Betrieb der Schubumkehrvorrichtung zu ermöglichen.

7. Antriebssystem nach einem der Ansprüche 4 bis 6, **dadurch gekennzeichnet, dass** die Gitter (40) sich in einem Winkel von 40 Grad bis 180 Grad zum feststehenden Gestell hin öffnen.

8. Antriebssystem nach einem der Ansprüche 1 bis 7, **dadurch gekennzeichnet, dass** es eine deutlich zylindrische Hülle (38) umfasst, die eine interne Führungsfläche für den Sekundärstrom bildet, welcher an ihrem hinteren Ende am Zwischengehäuse befestigt ist, und an ihrem vorderen Ende Halte- und Führungsvorrichtung für das Abgasgehäuse aufweist, wobei diese Hülle abnehmbare Platten für den Zugang zu den Bauteilen des Turbotriebwerks aufweist und sich diese gegenüber dem beweglichen Teil (40) des zylindrischen Gestells hinter der Gondel befinden.

9. Zylindrischer Aufbau hinter der Gondel eines integrierten Antriebssystems, wie in einem der Ansprüche 1 bis 8 beschrieben, **dadurch gekennzeichnet, dass** er zwei Teile enthält, von denen einer ein feststehendes Gestell (26) mit Vorrichtungen (20) zur Befestigung von Aufhängvorrichtungen des Motors an einen Teil des Flugzeugs sowie Vorrichtungen (28) zur Befestigung am Zwischengehäuse umfasst, und der andere ein beweglicher Teil ist, der vom festen Gestell getragen wird und aus zwei halbzylindrischen Gittern (40) besteht, die auf dem feststehenden Gestell gelenkig um Längsachsen angebracht sind.

10. Zylindrischer Aufbau hinter der Gondel nach Anspruch 9, **dadurch gekennzeichnet, dass** die beiden halbzylindrischen Gitter (40) durchbrochen sind.

11. Zylindrischer Aufbau hinter der Gondel nach Anspruch 9 oder 10, **dadurch gekennzeichnet, dass** er Abdeckplatten (44) enthält, die längenverschiebbar auf die Gitter (40) montiert sind.

## Claims

1. An integrated propulsive system for an aircraft, comprising a bypass turbojet engine and a nacelle (10) which is borne by an intermediate casing which defines an annular flow space for a secondary stream around the turbojet, wherein the nacelle comprises a downstream cylindrical structure (16) in two parts, one of which is a fixed framework (26) comprising means (20) for fastening engine (22, 24) attachment elements to a part (18) of the aircraft, and also means for fastening to the intermediate casing, and the other of which is a moveable part (40) which is borne by the fixed framework (26) and able to move between a service position in which it is applied to the fixed framework (26) for the operation of the engine, and an open position in which it is moved away from the fixed framework to allow access to engine components, locking means being provided to secure the moveable part (40) to the fixed framework (26) in the service position so as to rigidify the downstream structure of the nacelle and improve the transmission of loads from the engine to the aircraft.

2. The propulsive system as claimed in claim 1, wherein the moveable part (40) is able to move rotationally and/or translationally with respect to the fixed framework.

3. The propulsive system as claimed in claim 1 or 2, wherein at least some of the locking means are mounted on an annular flange (28) and on a longitudinal strut (34) of the fixed framework (26).

4. The propulsive system as claimed in claims 1 to 3, wherein the moveable part comprises two semicylindrical lattices (40) which can be symmetrical and are articulated around longitudinal axes on the fixed framework (26).

5. The propulsive system as claimed in claim 4, wherein the two semicylindrical lattices (40) are perforated and form a support (42) for outlet cascades of a thrust reverser.

6. The propulsive system as claimed in claim 5, wherein the fairing or cowling panels (44) are mounted so that they can slide longitudinally on the two lattices (40) to allow the operation of the thrust reverser.

7. The propulsive system as claimed in claims 4 to 6, wherein the lattices (40) open at an angle of between 40 degrees and 180 degrees with respect to the fixed framework.

8. The propulsive system as claimed in claims 1 to 7, which comprises a substantially cylindrical (38) case forming an internal guide surface for the secondary stream, which is fastened at its upstream end to the intermediate casing and comprises at its downstream end means for supporting and guiding the exhaust casing, this case comprising removable panels for access to turbojet components facing the moveable part (40) of the downstream cylindrical structure of the nacelle.

9. A downstream cylindrical structure of a nacelle of an integrated propulsive system as described in claims 1 to 8, which comprises two parts, one of which is a fixed framework(26) comprising means (20) for fastening engine attachment elements to a part of the aircraft, and also means (28) for fastening to the intermediate casing, and the other of which is a moveable part borne by the fixed framework and formed by two semicylindrical lattices (40) articulated about longitudinal axes on the fixed framework.

10. The downstream cylindrical nacelle structure as claimed in claim 9, wherein the two semicylindrical lattices (40) are perforated.

11. The downstream cylindrical nacelle structure as claimed in claim 9 or 10, which comprises cowling panels (44) mounted so that they can slide longitudinally
